Europäisches Patentamt

European Patent Office

Office européen des brevets

(11) Publication number: **0 027 342**
**A1**

## EUROPEAN PATENT APPLICATION

(21) Application number: 80303508.8

(22) Date of filing: 06.10.80

(51) Int. Cl.³: **A 44 B 11/12**
**B 65 D 63/16**

(30) Priority: 16.10.79 GB 7935866
11.06.80 GB 8019048

(43) Date of publication of application:
22.04.81 Bulletin 81/16

(84) Designated Contracting States:
BE CH DE FR IT LI NL SE

(71) Applicant: **ANCRA INTERNATIONAL LIMITED**
**Ancra House Browells Lane**
**Middlesex(GB)**

(72) Inventor: **Alfassa, Nissim**
**18 Steynings Way**
**London N2(GB)**

(74) Representative: **WHARTON, Peter Robert et al,**
**P.R. WHARTON & CO. IIth Floor Tower House Merrion**
**Way**
**Leeds LD2 8PB West Yorkshire(GB)**

(54) Buckle.

(57) A buckle has a body portion 10 and a pivotally attached lever plate portion 28, the body 10 having a striker plate 50 and a first latch portion 60 attached thereto and the lever plate 28 having a corresponding second latch portion 66 such that the latch portions interengage on closing the buckle to secure it and disengage on pressure being applied to the striker plate 50. Improperly latched buckles are caused to latch fully by tension on the cargo straps 44, 46.

EP 0 027 342 A1

./...

Croydon Printing Company Ltd.

Fig.1.

Fig.3.

- 1 -

## BUCKLE

This invention relates to buckles of the type intended for use with straps, and in which, when the buckle is closed, the attached strap is tensioned.

Such strap tensioning buckles are suitable for use in tying down cargo loads. For this service in particular it is very desirable that it should be possible to hold the buckle in the strap tensioning position positively, whilst permitting the buckles to be rapidly detached when desired. The invention seeks to provide a buckle improved in these respects.

According to the present invention there is provided a buckle for cargo straps which comprises a body portion and, pivotally attached thereto, a lever plate portion, the body portion having a striker plate and first latch portion pivotally attached thereto, and the lever plate having a corresponding second latch portion, such that the latch portions interengage on closing the buckle to secure it and disengage on pressure being applied to the striker plate.

The invention will be described further, by way of example, with reference to the accompanying drawings, in which:-

- 2 -

Figure 1 is a side elevation of a buckle embodying the invention;

Figure 2 is a plan view of the buckle of Figure 1; and

Figure 3 is a side elevation of the striker plate/latch assembly.

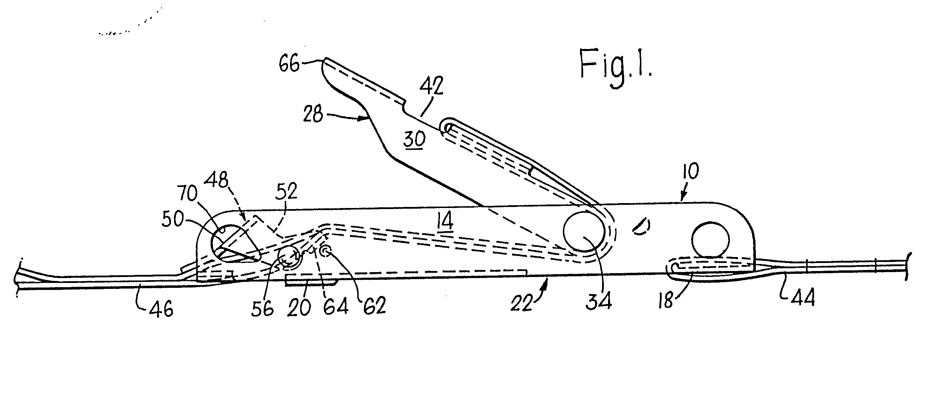

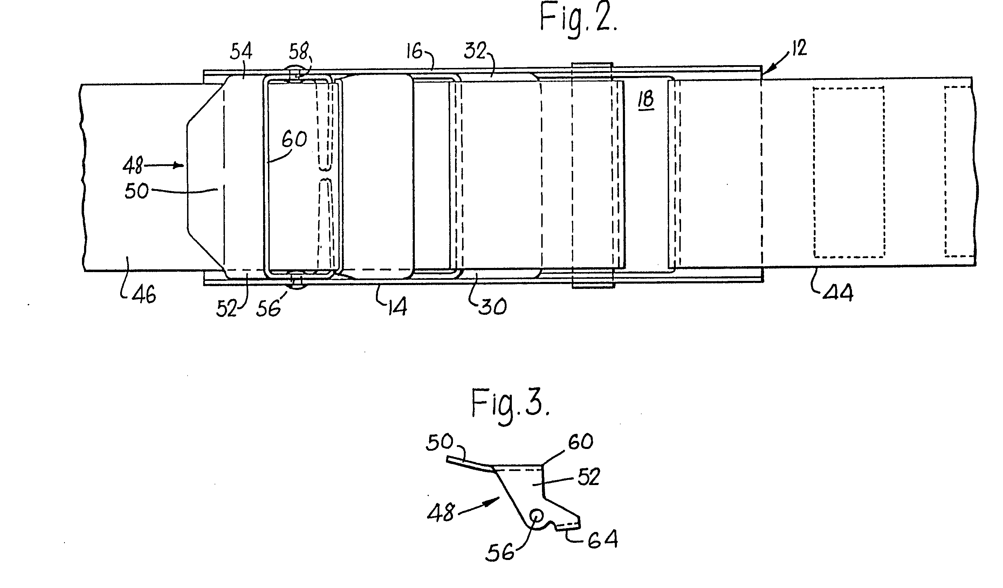

Referring to Figures 1 to 3, the buckle comprises a body portion 10 in the form of a shallow channel with a base 12, and two similar side walls 14, 16. The base 12 is substantially flat, and is shaped to present webs 18, 20 with an intervening space 22.

Pivotally secured to the side walls of the body portion is a lever plate assembly 28. This is also in the form of a shallow channel with side walls 30 and 32. The pivotal connection between the lever plate 28 and the body portion 10 is by means of a pivot pin 34, which passes through the side walls 14, 16 of the body portion and also through the side walls 30, 32 of the lever plate. Between the side walls of the lever plate it is surrounded by a bearing sleeve, and the pin may be held captive by circlips between the body and lever plate walls or the pin may comprise a rivet and be held captive by dishing the end of the pin remote from its head, as illustrated. The body portion 28 of the lever plate is formed with an opening 42 through which a strap may be passed.

A striker plate/latch assembly 48 comprises a striker plate 50 integral with side walls 52, 54 pivotally mounted between the walls 14, 16 by means of pins 56, 58. The leading edge of the striker plate 50 forms a first latch portion 60. The lower portion of the walls 52, 54 have infolded cross members 64. The leading edge 66 of the lever plate 28 forms a second latch portion.

In use, a strap 44 can be passed around the web 18 between the side walls 14, 16 and passed round the load to be secured. A second strap 46 is passed over the web 20 on the body portion 10, beneath the striker plate 50 but over the cross-members 64, around bearing sleeve of the pin 34, around the web formed at the forward end of the lever plate, passing through opening 42, and then back around the bearing sleeve, beneath the striker plate 50 and out over the web 20, the passage of this strap being indicated in Figure 1. The lever plate is then pivoted to its foremost position (i.e. to the right as seen in Figure 1), and the strap 46 is tightened by pulling it taut. If then the lever plate is pivoted rearwardly, in the anti-clockwise direction as viewed in Figure 1, the strap will be shortened and thereby tightened further.

The latching of the lever plate assembly 28 to the main body occurs as follows. As the lever plate 28 descends the front edges of its side walls 30, 32 contact the cross-members 64 of the assembly 48 causing the latter to pivot clockwise as viewed in Figure 1. The device is dimensioned such that the leading edge 60 of the striker plate 50 just passes over the lever plate leading edge 66, and the edge 60 thereby restrains, or latches, the lever plate assembly. A depression or dimple 62 is provided in the side wall 14 such that the end of the adjacent cross-members 64 is partially restrained by it. Further pressure on the members 64 causes them to snap over the dimple 62 into the fully latched position.

An advantage of the buckle of the invention is that further pressure on the straps 44 or 46, because of the passage of strap 46 over the cross-members 64, urges the first latch portion further into engagement with the second. Thus, if the latching edges 60 and 66 are not fully interengaged, pressure on the cargo straps will cause them to latch rather than the buckle springing open. However pressure or a blow on the striker plate 50 will cause the assembly 48 to rotate anti-clockwise thus releasing the lever plate 28 and allowing the buckle to open under the influence of the tension in the cargo straps.

A further optional feature of the buckle of the invention is that all the pivot pins and the like may be dimensioned to lie within the body portion walls 14, 16 thus presenting a smooth outline to the buckle reducing the possibility of snagging cargo or the like; and if the pins are held in place by circlips this allows repairs to be effected, e.g. exchange of a damaged latch plate assembly, easily in the field.

In certain circumstances it may be desirable to protect the buckle against inadvertent opening by accidental contact with, for example, a wall or other flat surface. This may be accomplished in a number of ways. A locking arrangement, e.g. a lever operable to prevent depression of the striker plate 50 until released, may be incorporated in the buckle. Another way of guarding against accidental release is to increase the height of the most rearward portions of the side walls 14, 16 in the area of the striker plate so that in the latched position they stand above the level of the striker plate. This means that only a blow, or pressure exerted, between the side walls 14, 16 will open the buckle, and pressure against a large surface will not effect release.

The self-latching operation of the buckle in use gives an additional margin of safety in the employment of the buckle, and the field repairable construction is convenient for users. Further, the ability to open the buckle with a blow means that the device is safer, since the fingers do not need to come near during release, which is an important advantage in view of the considerable tension under which the straps buckled are often maintained.

The buckle may be locked in the latched position, if desired, for security reasons, by passing a pin or the hasp of a padlock through the holes 70 in the walls 14, 16.

CLAIMS:-

1. A buckle for cargo straps which comprises a body portion and, pivotally attached thereto, a lever plate portion, the body portion having a striker plate and first latch portion pivotally attached thereto, and the lever plate having a corresponding second latch portion, such that the latch portions interengage on closing the buckle to secure it and disengage on pressure being applied to the striker plate.

2. A buckle as claimed in claim 1 in which the latch portions comprise complementary leading edges which interengage in the latched position.

3. A buckle as claimed in either of claims 1 or 2 in which if, in use, the latch portions are not fully interengaged, pressure on straps buckled will cuase full interengagement.

4. A buckle as claimed in claim 3 in which the first latch portion has connected therewith cross-members over which, in use, the straps pass so that tension on the straps bearing on the cross-members urges the latch portion into the latching position.

5. A buckle as claimed in any of claims 1 to 4 in which the pivotal mountings comprise pins the length of which is less than or equal to the width of the body portion, held in place within the body portion walls by circlips.

6. A buckle substantially as hereinbefore described with reference to and illustrated in the accompanying drawings.

Fig.1.

Fig.2.

Fig.3.

**European Patent Office**

**EUROPEAN SEARCH REPORT**

Application number

EP 80 30 3105

## DOCUMENTS CONSIDERED TO BE RELEVANT

| Category | Citation of document with indication, where appropriate, of relevant passages | Relevant to claim |
|---|---|---|
| | US - A - 3 866 272 (ANCRA CORP.)<br>* Column 1, lines 59-68; column 2, lines 1-62; claims 1,2; figures 1 and 2 *<br>--- | 1 |
| | US - A - 3 887 966 (REXNORD INC.)<br>* Column 2, lines 37-68; column 3, lines 1 to 50; figures *<br>--- | 1 |
| | US - A - 2 369 225 (H.F. GEORGE)<br>* Page 1, column 2, lines 36-55; page 2, column 1, entirely, column 2, 1st paragraph; figures 1-7 *<br>--- | 1 |
| | US - A - 3 423 800 (F.L. DAVIS)<br>* Column 1, lines 33-60; figures 1-3 *<br>--- | 1 |
| | GB - A - 914 085 (EASTERN ROTOR-CRAFT CORP.)<br>* Page 2, lines 79-130; page 3, entirely, figures *<br>--- | 1 |

### CLASSIFICATION OF THE APPLICATION (Int. Cl.³)

A 44 B 11/12
B 65 D 63/10

### TECHNICAL FIELDS SEARCHED (Int. Cl.³)

A 44 B
B 65 D

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-01-1981 | GARNIER |

EPO Form 1503.1  06.78